# EUROPÄISCHE PATENTSCHRIFT

(11) **EP 3 184 299 B1**
(45) Veröffentlichungstag und Bekanntmachung des Hinweises auf die Patenterteilung: **06.11.2019**
(21) Anmeldenummer: 16203992.9
(22) Anmeldetag: 14.12.2016
(51) Int. Cl.: B32B 15/08, B32B 7/06, B32B 15/14, B32B 27/12, B32B 27/30, B32B 3/08, B32B 3/14, B32B 3/26, B29C 65/00

(54) **BESCHICHTETES VERBUNDBAUTEIL**
COATED COMPOSITE COMPONENT
COMPOSANT COMPOSITE REVÊTU

(30) Priorität: 16.12.2015 DE 102015225467
(43) Veröffentlichungstag der Anmeldung: 28.06.2017
(73) Patentinhaber: Airbus Defence and Space GmbH, 82024 Taufkirchen (DE)
(72) Erfinder: Körwien, Thomas, 85635 Höhenkirchen (DE); Hoffmann, Michael, 28215 Bremen (DE); Meißner, Robert, 28215 Bremen (DE); Wehlan, Helmut, 86156 Augsburg (DE); Rössmann, Andreas, 81243 München (DE); Holtmannspötter, Jens, 85435 Erding (DE); Heckner, Sebastian, 81735 München (DE); Meer, Thomas, 85658 Egmating (DE); Geistbeck, Matthias, 87719 Mindelheim (DE)
(74) Vertreter: Isarpatent

(56) Entgegenhaltungen:
- US-A- 4 942 013
- US-A1- 2013 280 488

## Beschreibung

Die vorliegende Erfindung betrifft ein beschichtetes Verbundbauteil umfassend ein Verbundbauteil, eine fluorhaltige Folie und/oder ein fluorhaltiges Gewebe, Gestrick oder Gewirk, und ein Abreißgewebe, sowie ein Verfahren zum Herstellen eines beschichteten Verbundbauteils umfassend ein Verbundbauteil, eine fluorhaltige Folie und/oder ein fluorhaltiges Gewebe, Gestrick oder Gewirk, und ein Abreißgewebe.

Bei der Verbindung von Bauteilen, wie etwa beim Verkleben, Schweißen, etc., ist die Reinheit der zu verbindenden Oberflächen der Bauteile von Bedeutung für die Haftung der Bauteile untereinander. Um die Oberfläche der Bauteile vor dem Verbinden rein zu halten - etwa während einer Lagerung oder einem Transport - gibt es verschiedene Möglichkeiten, die Oberfläche der Bauteile mit einer Beschichtung zu versehen, welche vor dem Verbindungsvorgang entfernt werden kann.

So kann beispielsweise ein Abreißgewebe auf das Bauteil aufgebracht werden, welches vor dem Verbinden wieder entfernt wird.

Alternativ kann auch eine fluorhaltige Folie und/oder ein fluorhaltiges Gewebe, Gestrick oder Gewirk auf dem Bauteil aufgebracht werden, welche bzw. welches ebenfalls vor dem Verbinden entfernt werden kann. Die Verwendung von Folien, auch zur Strukturierung von Oberflächen, ist beispielsweise aus der DE 102014005146 A1 bekannt

Es besteht ein Bedarf an Beschichtungen für Bauteile, welche sicher aufgebracht werden können, sicher auf dem Bauteil während einer Lagerung, einem Transport, etc. verbleiben und einfach von dem Bauteil vor der Weiterverwendung, etwa einem Verbinden mit einem weiteren Bauteil, entfernt werden können, und einem entsprechenden beschichteten Bauteil.

Es ist somit eine Aufgabe der vorliegenden Erfindung, ein beschichtetes Bauteil bereitzustellen, welches durch die Beschichtung von Kontaminationen geschützt ist und bei der Weiterverarbeitung einfach von der Beschichtung befreit werden kann, sowie ein Verfahren bereitzustellen, mittels welchem ein solches Bauteil hergestellt werden kann.

Erfindungsgemäß wird diese Aufgabe durch das beschichtete Verbundbauteil mit den Merkmalen des Patentanspruchs 1 sowie das Verfahren mit den Merkmalen des Patentanspruchs 5 gelöst.

Die der vorliegenden Erfindung zugrunde liegende Idee besteht darin, dass durch ein Abreißgewebe eine fluorhaltige Folie und/oder ein fluorhaltiges Gewebe, Gestrick oder Gewirk auf einer festen Position des Verbundbauteils befestigt werden können und somit sich nicht leicht davon ablösen, jedoch eine weiterzuverarbeitende Stelle bzw. Oberfläche des Verbundbauteils, welche mit der fluorhaltigen Folie und/oder dem fluorhaltigen Gewebe, Gestrick oder Gewirk beschichtet ist, nicht mit dem Abreißgewebe in Kontakt kommt. Durch den Einsatz der fluorhaltigen Folie, beispielsweise einer Trennfolie, und/oder dem fluorhaltigen Gewebe, Gestrick oder Gewirk kann eine gute Oberfläche nach dem Trennen bereitgestellt werden, jedoch weisen die Folien bzw. Gewebe, Gestrick oder Gewirke üblicherweise eine geringere Haftung auf Verbundbauteilen auf, und können entsprechend schneller oder einfacher abgelöst werden, z.B. beim Transport, der Lagerung oder der Verarbeitung. Auch ist bei Verbundbauteilen, wie Laminaten, die nur mit solch einer leicht abtrennbaren Folie bzw. dem Gewebe, Gestrick oder Gewirk beschichtet sind, eine Prüfung der Beschichtungsqualität, z.B. durch Ultraschallprüfung, schwierig.

Beim Abziehen des Abreißgewebes vom Verbundbauteil löst sich mit diesem die fluorhaltige Folie und/oder das fluorhaltige Gewebe, Gestrick oder Gewirk vom Verbundbauteil ab. Die Stelle mit der fluorhaltigen Folie und/oder dem fluorhaltigen Gewebe, Gestrick oder Gewirk kann im Anschluss dann einfach gereinigt werden, oder eine weitere Reinigung ist ggf. nicht mehr erforderlich, wenn das Verbundbauteil weiter verwendet wird, beispielsweise mit einem weiteren Bauteil verbunden wird, z.B. verklebt oder verschweißt. Im Gegensatz hierzu kann an den Stellen, an denen sich das Abreißgewebe befunden hat, eine Reinigung erschwert sein, insbesondere da ein Abreißgewebe üblicherweise eine höhere Menge an Trennmitteln aufweist, insbesondere auf Kohlenwasserstoffbasis und/oder Siliconbasis. In den Unteransprüchen finden sich vorteilhafte Ausgestaltungen und Verbesserungen der Erfindung.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: schematisch einen beispielhaften Aufbau eines erfindungsgemäßen beschichteten Verbundbauteils;
- Fig. 2: schematisch einen weiteren beispielhaften Aufbau eines erfindungsgemäßen beschichteten Verbundbauteils; und
- Fig. 3: schematisch noch einen weiteren beispielhaften Aufbau eines erfindungsgemäßen beschichteten Verbundbauteils;

In den Figuren bezeichnen dieselben Bezugszeichen gleiche oder funktionsgleiche Komponenten, soweit nichts Gegenteiliges angegeben ist.

Ein erfindungsgemäßes beschichtetes Verbundbauteil, umfassend, in dieser Reihenfolge, ein Verbundbauteil, eine fluorhaltige Folie und/oder ein fluorhaltiges Gewebe, Gestrick oder Gewirk, und ein Abreißgewebe bzw. Peel Ply, wobei die Fläche der fluorhaltigen Folie und/oder des fluorhaltigen Gewebes, Gestricks oder Gewirks kleiner ist als die Fläche des Abreißgewebes und kleiner als die Oberfläche des Verbundbauteils. Gemäß bestimmten Ausführungsformen ist hierbei die fluorhaltige Folie und/oder das fluorhaltige Gewebe, Gestrick oder Gewirk an allen Rändern durch das Abreißgewebe auf dem Verbundbauteil angebracht bzw. fixiert. Hierbei kann das Abreißgewebe die gesamte Fläche der fluorhaltigen Folie und/oder des fluorhaltigen Gewebes, Gestricks oder Gewirks bedecken. Durch eine Fixierung an allen Rändern kann sichergestellt werden, dass keine Stelle verbleibt, an der sich die fluorhaltige Folie und/oder das fluorhaltige Gewebe, Gestrick oder Gewirk teilweise vom Verbundbauteil ablöst, so dass Kontaminationen eindringen könnten.

Das Verbundbauteil ist erfindungsgemäß nicht besonders beschränkt, umfasst insbesondere jedoch solche, bei denen bei der weiteren Verarbeitung eine hochreine Oberfläche von Bedeutung ist, beispielweise bei einem anschließenden Verbinden mit weiteren Bauteilen, wie beispielsweise einen Verkleben oder Verschweißen, beispielsweise in der Luftfahrt- oder Fahrzeugindustrie. Beispiele von Verbundbauteilen umfassen solche, die harz- und/oder plastikbasiert sind, wobei in diesen Fasern, z.B. Glasfasern, Carbonfasern, Aramidfasern, etc., eingearbeitet sein können oder nicht, beispielsweise Kohlenstofffasern. Hierbei können die Verbundbauteile sowohl ungehärtet, sozusagen als Rohverbundbauteil, wie auch gehärtet als Verbundbauteil vorliegen. Das erfindungsgemäße Verbundbauteil umfasst somit auch Verbundbauteile, die ggf. noch zu härten sind. Ein Beispiele für Verbundbauteile sind carbonfaserverstärkte Kunststoffe, wobei hier die Carbonfasern und die Kunststoffe nicht besonders beschränkt sind, und diese können beispielsweise durch entsprechende Infusionsprozesse oder Prepreg-Prozesse - z.B. durch Heißpressen oder im Autoklaven - hergestellt werden. Beispiele für geeignete Harze für die Herstellung der Kunststoffe umfassen beispielsweise Epoxide oder Vinylester, z.B. Epoxide, welche bei Temperaturen um 180°C gehärtet werden. Gemäß bestimmten Ausführungsformen ist das Verbundbauteil ein carbonfaserverstärkter Kunststoff.

Darüber hinaus ist auch das Abreißgewebe nicht besonders beschränkt. Insbesondere ist das Abreißgewebe jedoch hochtemperaturstabil, so dass es auch Temperaturen von 120°C oder mehr, bevorzugt 150°C oder mehr, weiter bevorzugt 180°C oder mehr standhält, etwa beim Aushärten eines Rohverbundbauteils umfassend ein Polymerharz, z.B. ein Epoxidharz, wie es beispielsweise bei carbonfaserverstärkten Kunststoffen verwendet wird. Das Abreißgewebe ist hierbei gemäß bestimmten Ausführungsformen nicht beschichtet und weist insbesondere keine fluorbasierten Schichten auf, welche die Anhaftung verschlechtern. Gemäß bestimmten Ausführungsformen umfasst das Abreißgewebe Trennmittel, die auf Silicon oder Kohlenwasserstoff basiert sind, um eine adäquate Enthaftung des Abreißgewebes vom Verbundbauteil zu gewährleisten. Geeignete Abreißgewebe umfassen z.B. solche von Tygavac Advanced Materials wie Superrelease Blue oder solche umfassend Super Release Blue der Firma Precision Fabrics Group.

Gemäß erfinderischer Ausführungsform bedeckt das Abreißgewebe nicht die gesamte Fläche der fluorhaltigen Folie und/oder des fluorhaltigen Gewebes, Gestricks oder Gewirks. Dies hat insbesondere den Vorteil - neben einer Materialersparnis - dass ein lokales Trocknen eines Rohverbundbauteils, wie etwa eines Prepregs, während der Härtung des beschichteten Rohverbundbauteils an Stellen mit Beschichtungen einer fluorhaltigen Folie und/oder eines fluorhaltigen Gewebe, Gestricks oder Gewirks vermindert oder verhindert werden kann. Zu diesem Zweck kann die fluorhaltige Folie und/oder das fluorhaltige Gewebe, Gestrick oder Gewirk zusätzlich oder alternativ gemäß bestimmten Ausführungsformen Löcher oder Poren aufweisen, wobei diese bevorzugt jedoch eine Größe aufweisen, die eine Kontamination verhindert, also etwa im Nanometer- bis unteren Mikrometerbereich. Hierbei ist dann auch eine Beschichtung der Folie und/oder des Gewebes, Gestricks oder Gewirks mit dem Abreißgewebe gemäß bestimmten Ausführungsformen zur Verhinderung einer Kontamination vorteilhaft. Das Einbringen von Löchern in die Folie und/oder das Gewebe, Gestrick oder Gewirk und/oder Öffnungen in das Abreißgewebe an den mit Folie und/oder Gewebe, Gestrick oder Gewirk beschichteten Stellen kann hierbei auch entsprechend den Materialien der Folie und/oder des Gewebes, Gestricks oder Gewirks bzw. des Abreißgewebes erfolgen.

Ebenso ist die fluorhaltige Folie und/oder das fluorhaltige Gewebe, Gestrick oder Gewirk nicht besonders beschränkt. Insbesondere ist jedoch auch die fluorhaltige Folie und/oder das fluorhaltige Gewebe, Gestrick oder Gewirk jedoch hochtemperaturstabil, so dass es auch Temperaturen von 120°C oder mehr, bevorzugt 150°C oder mehr, weiter bevorzugt 180°C oder mehr standhält, etwa beim Aushärten eines Rohverbundbauteils umfassend ein Polymerharz, z.B. ein Epoxidharz, wie es beispielsweise bei carbonfaserverstärkten Kunststoffen verwendet wird. Fluorhaltige Folien können beispielsweise unter Verwendung von fluorkohlenwasserstoffbasierten Verbindungen hergestellt werden, und fluorhaltige Gewebe, Gestricke oder Gewirke durch Verwendung von fluorhaltigen Fasern, welche aus solchen Verbindungen hergestellt werden können, wobei auch hier die Verbindungen nicht besonders beschränkt sind. Auch ist nicht ausgeschlossen, dass die Folien und/oder Gewebe, Gestricke oder Gewirke weitere Lagen umfassen, die nicht auf fluorhaltigen Materialien basiert sind, jedoch ist dann sicherzustellen, dass eine Oberfläche der Folie bzw. des Gewebes, Gestrickes oder Gewirkes, die mit dem Verbundbauteil in Kontakt kommt, fluorbasierte Materialien umfasst und insbesondere aus diesen besteht. Gemäß bestimmten Ausführungsformen ist die Folie und/oder das Gewebe, Gestrick oder Gewirk fluorhaltig und umfasst nur fluorbasierte Materialien. Beispiele für geeignete Folien umfassen Airtech WL5200 und Richmond A6100.

Durch die fluorhaltigen Materialen an der Beschichtungsstelle mit dem Verbundbauteil kann sichergestellt werden, dass keine Hilfsstoffe aus den Abreißgeweben, wie etwa Trennmittelrückstände, auf diesen Beschichtungsstellen verbleiben, die bei einer weiteren Verarbeitung, wie einer Verklebung bzw. einem Verschweißen, zu einer Degradation hiervon führen können. Trennmittelrückstände bzw. im Allgemeinen Hilfsstoffrückstände aus Abreißgeweben können aus Abweichungen in der Zusammensetzung von Hilfsstoffen oder Prozessabweichungen herrühren, was zu Schwankungen bei der Weiterverarbeitung, wie etwa einem Kleben oder Schweißen, führen kann.

Auch sind die Abmessungen der fluorhaltigem Folie und/oder des fluorhaltigen Gewebes, Gestricks oder Gewirks erfindungsgemäß nicht besonders beschränkt. Bevorzugt ist die Folie und/oder das Gewebe, Gestrick oder Gewirk nicht so dick, dass Spannungen beim Aufbringen des Abreißgewebes auftreten. Bevorzugt ist die Verwendung von fluorhaltigen Folien, da diese leichter aufgebracht werden können und auch billiger sind.

Es ist erfindungsgemäß darüber nicht ausgeschlossen, dass mehr als eine fluorhaltige Folie und/oder ein fluorhaltiges Gewebe, Gestrick oder Gewirk auf dem Verbundbauteil aufgebracht sind - beispielsweise an verschiedenen Stellen, wobei hier zumindest eine fluorhaltige Folie und/oder ein fluorhaltiges Gewebe, Gestrick oder Gewirk durch das Abreißgewebe am Verbundbauteil befestigt ist, bevorzugt jedoch alle. Auch können eine Oberfläche oder mehrere Oberflächen, gemäß bestimmten Ausführungsformen auch die gesamte Oberfläche, des Verbundbauteils mit dem Abreißgewebe beschichtet sein, wobei sich zumindest an einer Stelle eine fluorhaltige Folie und/oder ein fluorhaltiges Gewebe, Gestrick oder Gewirk zwischen dem Verbundbauteil und dem Abreißgewebe befindet. Wenn mehrere Stellen des Verbundbauteils mit mehr als einer fluorhaltigen Folie und/oder einem fluorhaltigen Gewebe, Gestrick oder Gewirk beschichtet sind, können diese gemäß bestimmten Ausführungsformen bei der Weiterverarbeitung auch zu unterschiedlichen oder zum selben Zeitpunkt abgetrennt werden, so dass eine Flexibilität bei der Weiterverarbeitung erzielt werden kann.

Gemäß bestimmten Ausführungsformen befindet sich die fluorhaltige Folie und/oder das fluorhaltige Gewebe, Gestrick oder Gewirk an einer Stelle, an der das Verbundbauteil mit einem weiteren Bauteil verbunden werden soll. An solchen Stellen ist eine konstante Oberflächenqualität von Bedeutung, welche durch die Verwendung der fluorhaltigen Folie und/oder des fluorhaltigen Gewebes, Gestricks oder Gewirks erzielt werden kann, wobei etwaige Rückstände dieser Folien und/oder Gewebe, Gestricke oder Gewirke einfach abgereinigt werden können, z.B. durch Plasmabehandlung, beispielsweise mittels Atmosphärendruckplasma oder Niederdruckplasma. Diese Stellen sind dann gemäß bestimmten Ausführungsformen einfach inspizierbar, insbesondere bei glatten Oberflächen, z.B. durch Aerosolwetting, wobei ein definiertes Wasser-Aerosol aufgetragen wird.. Auch kann die Oberfläche nach dem Abtrennen der fluorhaltigen Folie und/oder des fluorhaltigen Gewebes, Gestricks oder Gewirks auf Verbleiben von Fluor-Tracern untersucht werden und somit die Oberfläche untersucht werden.

Gemäß bestimmten Ausführungsformen ist die fluorhaltige Folie und/oder das fluorhaltige Gewebe, Gestrick oder Gewirk zumindest teilweise, insbesondere vollständig, mit einem Blech bedeckt. Hierdurch kann der Folie und/oder dem Gewebe, Gestrick oder Gewirk eine zusätzliche Festigkeit und Stabilität verliehen werden, was die Fixierung beim anschließenden Aufbringen des Abreißgewebes erleichtern kann und auch sicherstellen kann, dass die Folie und/oder das Gewebe, Gestrick oder Gewirk nicht verrutscht. Auch kann hierdurch eine ebene Oberfläche erzeugt werden. Das Blech ist hierbei nicht besonders beschränkt, umfasst gemäß bestimmten Ausführungsformen jedoch ein Metall wie Al und/oder eine Legierung oder besteht daraus. Bei Verwendung von löchrigen oder porösen fluorhaltigen Folien und/oder fluorhaltigen Geweben, Gestricken oder Gewirken kann auch das Blech porös sein oder Löcher aufweisen, die beispielsweise entsprechend ausgerichtet sind. Die Dicke des Blechs ist hierbei bevorzugt so, dass beim Aufbringen des Abreißgewebes keine Spannungen auftreten, z.B. 0,5 bis 50 mm, bevorzugt 1 bis 20 mm, weiter bevorzugt 2 - 10 mm. Das Blech kann hierbei bereits vor dem Aufbringen der fluorhaltigen Folie und/oder des fluorhaltigen Gewebes, Gestricks oder Gewirks darauf aufgebracht sein, oder nach Aufbringen derselben bzw. desselben darauf beschichtet werden.

Gemäß einem weiteren Aspekt betrifft die vorliegende Erfindung ein Verfahren zum Herstellen eines beschichteten Verbundbauteils, insbesondere des erfindungsgemäßen beschichteten Verbindungsbauteils, umfassend
i) Bereitstellen eines Rohverbundbauteils;
ii) Aufbringen einer fluorhaltige Folie und/oder ein fluorhaltigen Gewebes, Gestricks oder Gewirk;, und
iii) Aufbringen eines Abreißgewebes;
wobei die Fläche der fluorhaltigen Folie und/oder des fluorhaltigen Gewebes, Gestricks oder Gewirks kleiner ist als die Fläche des Abreißgewebes und kleiner als die Oberfläche des Verbundbauteils.

Das Rohverbundbauteil kann hierbei, wie bereits oben erläutert, ein Prepreg sein, der noch auszuhärten ist, aber es kann auch ein bereits gefertigtes Verbundbauteil sein, auf das die Beschichtungen aufzubringen sind. Ein Prepreg kann hierbei beispielsweise eine aushärtbare Flüssigkeit wie ein Harz, z.B. ein Epoxidharz, oder einen aushärtbaren Schaum, und Fasern, z.B. Carbonfasern, umfassen.

Gemäß bestimmten Ausführungsformen ist das Rohverbundbauteil ein ungehärtetes Rohverbundbauteil, insbesondere ein ungehärteter carbonfaserverstärkter Kunststoff. In einem solchen Fall kann sich an das Beschichten ein Schritt iv) des Härtens des beschichteten Rohverbundbauteils nach dem Aufbringen des Abreißgewebes anschließen, wobei nicht ausgeschlossen ist, dass sich daran weitere Schritte anschließen..

Gemäß bestimmten Ausführungsformen wird die fluorhaltige Folie und/oder das fluorhaltige Gewebe, Gestrick oder Gewirk an eine Stelle aufgebracht, an der das Verbundbauteil mit einem weiteren Bauteil verbunden werden soll. Hierbei können durch die Form der Folie und/oder des Gewebes, Gestricks oder Gewirks verschiedenste Verbindungsgeometrien verwirklicht werden, die in ihrer Form, beispielsweise als Vollkörper oder Hohlkörper, nicht beschränkt sind.

Gemäß erfinderischen Ausführungsformen wird beim Aufbringen des Abreißgewebes nicht die gesamte Fläche der fluorhaltigen Folie und/oder des fluorhaltigen Gewebes, Gestricks oder Gewirks bedeckt. Gemäß erfinderischen Ausführungsformen werden jedoch mit dem Abreißgewebe alle Ränder der fluorhaltigen Folie und/oder des fluorhaltigen Gewebes, Gestricks oder Gewirks bedeckt, um eine ausreichende Fixierung davon auf dem Rohverbundbauteil zu gewährleisten.

Gemäß bestimmten Ausführungsformen kann die fluorhaltige Folie und/oder das fluorhaltige Gewebe, Gestrick oder Gewirk porös sein oder Löcher aufweisen. Zusätzlich oder alternativ kann auch das Abreißgewebe Öffnungen an den Stellen aufweisen, an denen die fluorhaltige Folie und/oder das fluorhaltige Gewebe, Gestrick oder Gewirk aufgetragen ist, wobei sicherzustellen ist, das hierbei die Ränder davon mit dem Abreißgewebe bedeckt sind.

Gemäß bestimmten Ausführungsformen ist oder wird die fluorhaltige Folie und/oder das fluorhaltige Gewebe, Gestrick oder Gewirk zumindest teilweise mit einem Blech bedeckt.

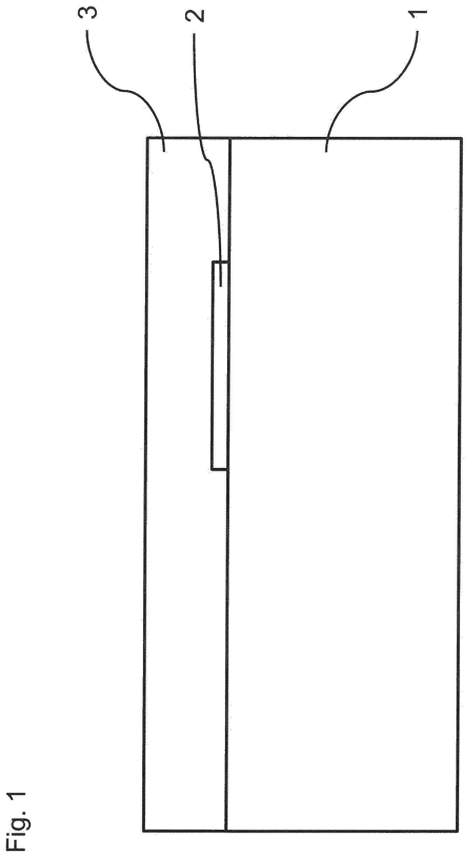

Beispielhafte beschichtete Verbundbauteile sind in den beigefügten Figuren 1 bis 3 schematisch dargestellt.

In Figur 1 ist schematisch eine erfindungsgemäße Ausführungsform gezeigt, wobei ein Verbundbauteil 1, hier beispielsweise ein ungehärteter oder gehärteter carbonfaserverstärkter Kunststoff, gezeigt ist, auf das eine fluorhaltige Folie 2 aufgebracht ist, die von einem Abreißgewebe 3 bedeckt ist, wobei das Abreißgewebe 3 hier beispielsweise eine komplette Seite des Verbundbauteils 1 bedeckt, inklusive der gesamten fluorhaltigen Folie 2. Natürlich sind, wie oben beschrieben, auch Bedeckungen auf mehreren Seiten möglich, wie auch fluorhaltige Folien auf mehreren Seiten.

Ein Beispiel eines erfindungsgemäßen beschichteten Verbundbauteils gemäß Figur 1 umfasst beispielsweise ein carbonfaserverstärkter Kunststoff, auf welchem auf einer Seite eine fluorhaltige Folie (z.B. Airtech WL5200 der Airtech Advanced Material Group) in Scheibenform aufgebracht ist, auf welche wiederum über die gesamte Fläche der Scheibe ein Abreißgewebe (Superlease Blue von Tygavac Advanced Materials) aufgebracht ist.

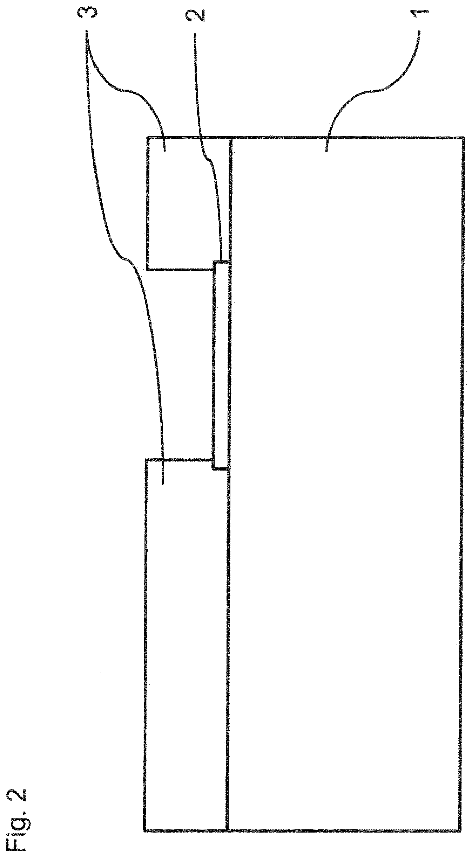

In Figur 2 ist eine Weiterentwicklung des beschichteten Verbundbauteils aus Fig. 1 schematisch gezeigt, wobei hier nicht die gesamte fluorhaltige Folie 2 mit dem Abreißgewebe 3 bedeckt ist, sondern nur die Ränder davon, um zum einen Material zu sparen, aber auch bei der Härtung des Rohverbundbauteils, also beispielsweise eine ungehärteten carbonfaserverstärkten Kunststoffs, ein lokales Trocknen zu vermeiden.

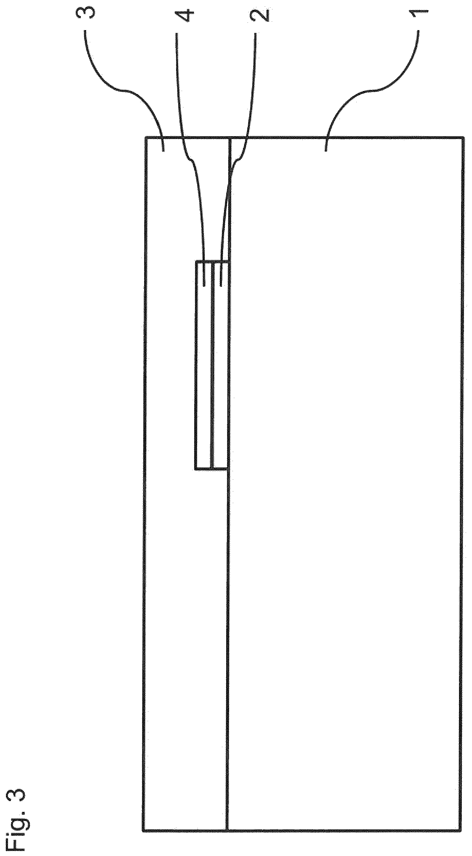

Die in Figur 3 schematisch dargestellte Ausführungsform baut wiederum auf der in Figur 1 gezeigten Ausführungsform auf, wobei hier auf die fluorhaltige Folie 1 ein Blech 4 zur Stabilisierung aufgebracht ist.

Beispielsweise können auch bereits verbundene Bauteile wiederum beschichtet werden, um diese nach dem Verbinden wieder vor Kontamination zu schützen, beispielsweise wenn die Verbindung in einer kontaminationsarmen Atmosphäre wie einem Vakuum erfolgt ist.

### Bezugszeichenliste

- 1: Verbundbauteil
- 2: fluorhaltige Folie
- 3: Abreißgewebe
- 4: Blech

## Patentansprüche

1. Beschichtetes Verbundbauteil, umfassend, in dieser Reihenfolge,
ein Verbundbauteil (1);
eine fluorhaltige Folie (2) und/oder ein fluorhaltiges Gewebe, Gestrick oder Gewirk; und
ein Abreißgewebe (3);
wobei die Fläche der fluorhaltigen Folie (2) und/oder des fluorhaltigen Gewebes, Gestricks oder Gewirks kleiner als die Fläche des Abreißgewebes (3) und kleiner als die Oberfläche des Verbundbauteils (1) ist, **dadurch gekennzeichnet, dass** das Abreißgewebe (3) nicht die gesamte Fläche der fluorhaltigen Folie und/oder des fluorhaltigen Gewebes, Gestricks oder Gewirks bedeckt, und mit dem Abreißgewebe (3) zumindest alle Ränder der fluorhaltigen Folie und/oder des fluorhaltigen Gewebes, Gestricks oder Gewirks bedeckt sind,
wobei die fluorhaltige Folie (2) und/oder das fluorhaltige Gewebe, Gestrick oder Gewirk zumindest teilweise mit einem Blech (4) bedeckt sein kann.

2. Beschichtetes Verbundbauteil nach Anspruch 1,
**dadurch gekennzeichnet,**
**dass** sich die fluorhaltige Folie (2) und/oder das fluorhaltige Gewebe, Gestrick oder Gewirk an einer Stelle befindet, an welcher das Verbundbauteil (1) mit einem weiteren Bauteil verbindbar ist.

3. Beschichtetes Verbundbauteil nach Anspruch 1 oder 2,
**dadurch gekennzeichnet,**
**dass** das Verbundbauteil (1) ein carbonfaserverstärkter Kunststoff ist.

4. Beschichtetes Verbundbauteil nach wenigstens einem der vorhergehenden Ansprüche,
**dadurch gekennzeichnet,**
**dass** die fluorhaltige Folie (2) und/oder das fluorhaltige Gewebe, Gestrick oder Gewirk porös ist oder Löcher aufweist.

5. Verfahren zum Herstellen eines beschichteten Verbundbauteils, mit folgenden Verfahrensschritten:
i) Bereitstellen eines Rohverbundbauteils;
ii) Aufbringen einer fluorhaltige Folie (2) und/oder ein fluorhaltigen Gewebes, Gestricks oder Gewirk, und
iii) Aufbringen eines Abreißgewebes (3);
wobei die Fläche der fluorhaltigen Folie (2) und/oder des fluorhaltigen Gewebes, Gestricks oder Gewirks kleiner als die Fläche des Abreißgewebes (3) und kleiner als die Oberfläche des Rohverbundbauteils ist, **gekennzeichnet durch**:
Bedecken nicht der gesamten Fläche der fluorhaltigen Folie und/oder des fluorhaltigen Gewebes, Gestricks oder Gewirks durch das Abreißgewebe (3); und optionales Bedecken der fluorhaltigen Folie (2) und/oder des fluorhaltigen Gewebes, Gestricks oder Gewirks zumindest teilweise mit einem Blech (4); und
Bedecken zumindest aller Ränder der fluorhaltigen Folie und/oder des fluorhaltigen Gewebes, Gestricks oder Gewirks mit dem Abreißgewebe (3).

6. Verfahren nach Anspruch 5,
**dadurch gekennzeichnet,**
**dass** das Rohverbundbauteil ein ungehärteter carbonfaserverstärkter Kunststoff ist und das Verfahren den weiteren Schritt iv) des Aushärtens des beschichteten Rohverbundbauteils nach dem Aufbringen des Abreißgewebes (3) aufweist.

7. Verfahren nach Anspruch 5 oder 6,
**dadurch gekennzeichnet,**
**dass** sich die fluorhaltige Folie (2) und/oder das fluorhaltige Gewebe, Gestrick oder Gewirk an einer Stelle befindet, an welcher das Rohverbundbauteil mit einem weiteren Bauteil verbindbar ist.

8. Verfahren nach einem der Ansprüche 5 bis 7,
**dadurch gekennzeichnet,**
**dass** die fluorhaltige Folie (2) und/oder das fluorhaltige Gewebe, Gestrick oder Gewirk porös ist oder Löcher aufweist.

## Claims

1. Coated composite component, comprising, in the following order,
a composite component (1);
a fluorine-containing film (2) and/or a fluorine-containing woven fabric, knit or warp-knit; and
a peel ply (3);
wherein the area of the fluorine-containing film (2) and/or of the fluorine-containing woven fabric, knit or warp-knit is smaller than the area of the peel ply (3) and smaller than the surface of the composite component (1), **characterized in that** the peel ply (3) does not cover the entire area of the fluorine-containing film and/or of the fluorine-containing woven fabric, knit or warp-knit, and at least all the edges of the fluorine-containing film and/or of the fluorine-containing woven fabric, knit or warp-knit are covered by the peel ply (3),
wherein the fluorine-containing film (2) and/or the fluorine-containing woven fabric, knit or warp-knit can be covered at least partially with a metal sheet (4).

2. Coated composite component according to Claim 1, **characterized**
**in that** the fluorine-containing film (2) and/or the fluorine-containing woven fabric, knit or warp-knit is located at a point at which the composite component (1) is able to be connected to a further component.

3. Coated composite component according to Claim 1 or 2,
**characterized**
**in that** the composite component (1) is a carbon-fibre-reinforced plastic.

4. Coated composite component according to at least one of the preceding claims,
**characterized**
**in that** the fluorine-containing film (2) and/or the fluorine-containing woven fabric, knit or warp-knit is porous or has holes.

5. Method for producing a coated composite component, having the following method steps of:
i) providing a crude composite component;
ii) applying a fluorine-containing film (2) and/or a fluorine-containing woven fabric, knit or warp-knit, and
iii) applying a peel ply (3);
wherein the area of the fluorine-containing film (2) and/or of the fluorine-containing woven fabric, knit or warp-knit is smaller than the area of the peel ply (3) and smaller than the surface of the crude composite component, **characterized by**:
not covering the entire area of the fluorine-containing film and/or of the fluorine-containing woven fabric, knit or warp-knit with the peel ply (3) ;
and optionally covering the fluorine-containing film (2) and/or the fluorine-containing woven fabric, knit or warp-knit at least partially with a metal sheet (4); and
covering at least all the edges of the fluorine-containing film and/or of the fluorine-containing woven fabric, knit or warp-knit with the peel ply (3) .

6. Method according to Claim 5,
**characterized**
**in that** the crude composite component is an uncured carbon-fibre-reinforced plastic and the method has the further step iv) of curing the coated crude composite component following the application of the peel ply (3).

7. Method according to Claim 5 or 6,
**characterized**
**in that** the fluorine-containing film (2) and/or the fluorine-containing woven fabric, knit or warp-knit is located at a point at which the crude composite component is able to be connected to a further component.

8. Method according to one of Claims 5 to 7,
**characterized**
**in that** the fluorine-containing film (2) and/or the fluorine-containing woven fabric, knit or warp-knit is porous or has holes.

## Revendications

1. Composant composite pourvu d'un revêtement, ledit composant comprenant, dans cet ordre,
un composant composite (1) ;
un film (2) contenant du fluor et/ou un tissu tissé, un tissu tricoté ou un tissu maillé contenant du fluor ; et
un tissu déchirable (3) ;
la surface du film (2) contenant du fluor et/ou du tissu tissé, du tissu tricoté ou du tissu maillé contenant du fluor étant plus petite que la surface du tissu déchirable (3) et plus petite que la surface du composant composite (1), **caractérisé en ce que** le tissu déchirable (3) ne recouvre pas toute la surface du film contenant du fluor et/ou du tissu tissé, du tissu tricoté ou du tissu maillé contenant du fluor, et au moins tous les bords du film contenant du fluor et/ou du tissu tissé, du tissu tricoté ou du tissu maillé contenant du fluor sont recouverts avec le tissu déchirable (3),
le film (2) contenant du fluor et/ou le tissu tissé, le tissu tricoté ou le tissu maillé contenant du fluor pouvant être au moins partiellement recouverts d'une plaque de métal (4).

2. Composant composite pourvu d'un revêtement selon la revendication 1,
**caractérisé en ce que**
le film (2) contenant du fluor et/ou le tissu tissé, le tissu tricoté ou le tissu maillé contenant du fluor se trouvent à un emplacement où le composant composite (1) peut être relié à un autre composant.

3. Composant composite pourvu d'un revêtement selon la revendication 1 ou 2,
**caractérisé en ce que**
le composant composite (1) est une matière synthétique renforcée de fibres de carbone.

4. Composant composite pourvu d'un revêtement selon l'une au moins des revendications précédentes, **caractérisé en ce que**
le film (2) contenant du fluor et/ou le tissu tissé, le tissu tricoté ou le tissu maillé contenant du fluor sont poreux ou comportent des trous.

5. Procédé de fabrication d'un composant composite pourvu d'un revêtement, ledit procédé comprenant les étapes suivantes :
i) fournir un composant composite brut ;
ii) appliquer un film (2) contenant du fluor et/ou un tissu tissé, un tissu tricoté ou un tissu maillé contenant du fluor, et
iii) appliquer un tissu déchirable (3) ;
la surface du film (2) contenant du fluor et/ou du tissu tissé, du tissu tricoté ou du tissu maillé contenant du fluor étant plus petite que la surface du tissu déchirable (3) et plus petite que la surface du composant composite brut, **caractérisée par** les étapes suivantes :
ne pas recouvrir toute la surface du film contenant du fluor et/ou du tissu tissé, du tissu tricoté ou du tissu maillé contenant du fluor avec le tissu déchirable (3) ; et recouvrir éventuellement le film (2) contenant du fluor et/ou le tissu tissé, le tissu tricoté ou le tissu maillé contenant du fluor au moins partiellement avec une plaque de métal (4) ; et recouvrir au moins tous les bords du film contenant du fluor et/ou du tissu tissé, du tissu tricoté ou du tissu maillé contenant du fluor avec le tissu déchirable (3).

6. Procédé selon la revendication 5,
**caractérisé en ce que**
le composant composite brut est une matière synthétique renforcée de fibres de carbone et non durcie et **en ce que** le procédé comprend l'étape iv) supplémentaire de durcissement du composant composite brut pourvu du revêtement après l'application du tissu déchirable (3).

7. Procédé selon la revendication 5 ou 6,
**caractérisé en ce que**
le film (2) contenant du fluor et/ou le tissu tissé, le tissu tricoté ou le tissu maillé contenant du fluor se trouvent à un emplacement où le composant composite brut peut être relié à un autre composant.

8. Procédé selon l'une des revendications 5 à 7,
**caractérisé en ce que**
le film (2) contenant du fluor et/ou le tissu tissé, le tissu tricoté ou le tissu maillé contenant du fluor sont poreux ou comportent des trous.
